# EUROPÄISCHE PATENTANMELDUNG

(11) **EP 3 435 037 A1**
(43) Veröffentlichungstag der Anmeldung: **30.01.2019**
(21) Anmeldenummer: 18178175.8
(22) Anmeldetag: 18.06.2018
(51) Int. Cl.: G01C 21/36, B60W 50/08, B60W 50/14, B62D 15/02

(54) **SYSTEM ZUR AUSWAHL VON FAHRMANÖVERN EINES FAHRZEUGS ZUM AUTOMATISIERTEN FAHREN**

(30) Priorität: 27.07.2017 DE 102017212992
(71) Anmelder: Continental Automotive GmbH, 30165 Hannover (DE)
(72) Erfinder: MATHE, Benjamin, 55118 Mainz (DE); WENZEL, Katrin, 64665 Alsbach-Hähnlein (DE); VON BYCHOWSKI, Heidi, 61352 Bad Homburg (DE); MEIER-ARENDT, Guido, 63225 Langen (DE)

(57) **Zusammenfassung**

Ein System (2) zur Auswahl von Fahrmanövern eines Fahrzeugs (1) zum automatisierten Fahren umfasst eine Anzeigeeinrichtung (10) zur Anzeige einer Fahrstrecke (50) des Fahrzeugs (1) in verschiedenen Darstellungsarten, eine Auswahleinrichtung (20) zur Auswahl einer der Darstellungsarten der Fahrstrecke (50) und eine Steuereinrichtung (30) zur Steuerung der Anzeigeeinrichtung (10). Die Steuereinrichtung (30) ist dazu ausgebildet, in Abhängigkeit von der ausgewählten Darstellungsart der Fahrstrecke (50) unterschiedliche mögliche Fahrmanöver (41a, 41b, 42a, 42b, 43a, 43b) zur Auswahl auf der Anzeigeeinrichtung (10) darzustellen. Die Auswahleinrichtung (20) ist dazu ausgebildet, eines der unterschiedlichen möglichen Fahrmanöver (41a, 41b, 42a, 42b, 43a, 43b) zur Ausführung während des automatisierten Fahrens auszuwählen.

## Beschreibung

Die Erfindung betrifft ein System zur Auswahl von Fahrmanövern eines Fahrzeugs zum automatisierten Fahren.

Ein System zum automatisierten Fahren erlaubt das Fahren von einem Startpunkt zu einem Zielort, wobei das Fahrzeug die gesamte Stecke oder zumindest einzelne Streckenabschnitte weitestgehend autonom fahren kann. Ein Fahrer soll jedoch die Möglichkeit haben, in das Fahrverhalten des autonom fahrenden Fahrzeugs einzugreifen, beziehungsweise die Fahrweise des autonom fahrenden Fahrzeugs zu verändern. Insbesondere sollen bestimmte Fahrmanöver während der Fahrt von einem Fahrzeuginsassen ausgewählt werden, die anschließend von dem autonom fahrenden Fahrzeug ausgeführt werden. Zu den möglichen Fahrmanövern gehört beispielsweise ein Spurwechsel nach links oder rechts, das Überholen eines voranfahrenden Fahrzeugs, das Anfahren eines Rastplatzes oder der nächsten Tankstelle.

Ein Anliegen der vorliegenden Erfindung ist es, ein System zur Auswahl von Fahrmanövern eines Fahrzeugs zum automatisierten Fahren anzugeben, das einem Benutzer eine einfache Möglichkeit bietet, eine große Anzahl von verschiedenen Fahrmanövern zur Ausführung durch das autonom fahrende Fahrzeug auszuwählen.

Die Aufgabe wird mit einem System zur Auswahl von Fahrmanövern eines Fahrzeugs zum automatisierten Fahren gemäß den Merkmalen des Patentanspruchs 1 gelöst.

Das System zur Auswahl von Fahrmanövern eines Fahrzeugs zum automatisierten Fahren umfasst insbesondere eine Anzeigeeinrichtung zur Anzeige einer Fahrstrecke des Fahrzeugs in verschiedenen Darstellungsarten. Weiterhin umfasst das System eine Auswahleinrichtung zur Auswahl einer der Darstellungsarten der Fahrstrecke sowie eine Steuereinrichtung zur Steuerung der Anzeigeeinrichtung. Die Steuereinrichtung ist dazu ausgebildet, in Abhängigkeit von der ausgewählten Darstellungsart der Fahrstrecke unterschiedliche mögliche Fahrmanöver zur Auswahl auf der Anzeigeeinrichtung darzustellen. Die Auswahleinrichtung ist dazu ausgebildet, eines der unterschiedlichen möglichen Fahrmanöver zur Ausführung während des automatisierten Fahrens auszuwählen.

Die Anzeigeeinrichtung kann beispielsweise ein Bildschirm/ Display, insbesondere eine FDC(Full Digital Cluster)-Anzeigeeinrichtung sein. Die Anzeigeeinrichtung kann in einem Darstellungsmodus zur Darstellung der Fahrstrecke in den verschiedenen Darstellungsarten oder in einem Eingabemodus zur Auswahl eines der Fahrmanöver betrieben werden. Die Anzeigeeinrichtung lässt sich beispielsweise mittels der Auswahleinrichtung von dem Darstellungsmodus in den Eingabemodus und umgekehrt umschalten.

Wenn die Anzeigeeinrichtung in dem Darstellungsmodus betrieben wird, wird die Fahrstrecke auf der Anzeigeeinrichtung dargestellt, ohne dass irgendwelche Eingaben vorgenommen werden können. Insbesondere können keine Fahrmanöver ausgewählt werden. Im Darstellungsmodus kann die Fahrstrecke in den verschiedenen Darstellungsarten auf der Anzeigeeinrichtung dargestellt werden. Die unterschiedlichen Darstellungsarten der Fahrstrecke können beispielsweise verschiedene Vergrößerungsstufen/Zoomstufen der Fahrstrecke sein, in denen die Fahrstrecke auf der Anzeigeeinrichtung dargestellt werden kann.

In einer möglichen Darstellungsart des Darstellungsmodus kann beispielsweise eine nähere Umgebung um eine aktuelle Fahrzeugposition dargestellt werden (Umgebungsvisualisierung). Bei einer weiteren Darstellungsart im Darstellungsmodus wird ein größerer Abschnitt der Fahrstrecke, beispielsweise ein Streckenabschnitt von mehreren Kilometern auf der Anzeigeeinrichtung dargestellt (Navigationskartendarstellung). Bei einer weiteren Darstellungsart der Fahrstrecke mit der minimalsten Vergrößerungsstufe wird die Gesamtfahrstrecke im Darstellungsmodus auf der Anzeigeeinrichtung dargestellt.

Zur Auswahl eines möglichen Fahrmanövers wird von dem Darstellungsmodus in den Eingabemodus gewechselt. Dazu wird über die Auswahleinrichtung der Eingabemodus ausgewählt. Im Eingabemodus der Anzeigeeinrichtung können nun in Abhängigkeit von der zuvor im Darstellungsmodus eingestellten Darstellungsart unterschiedliche mögliche Fahrmanöver ausgewählt werden.

Beispielsweise können im Eingabemodus, der der Umgebungsvisualisierung zugeordnet ist, Fahrmanöver ausgeführt werden, die ab ihrer Auswahl kurzfristig beziehungsweise sofort erfolgen sollen. Dazu gehört zum Beispiel ein Überholvorgang eines vorausfahrenden Fahrzeugs. Im Eingabe- beziehungsweise Manövermodus, der der Navigationskartendarstellung im Darstellungsmodus zugeordnet ist, können Fahrmanöver ausgewählt werden, die an einer Position des dargestellten Streckenabschnitts erfolgen sollen. Dazu gehören Manöver, die erst in einigen Kilometern Entfernung von der aktuellen Position erfolgen sollen. Im Eingabe-/Manövermodus, der der Gesamtroutendarstellung zugeordnet ist, können Fahrmanöver ausgewählt werden, die entlang der gesamten Strecke erfolgen sollen beziehungsweise die Gesamtstrecke betreffen.

Durch das angegebene System zur Auswahl von Fahrmanövern eines Fahrzeugs zum automatisierten Fahren kann ein multimodales Anzeige- und Bedienkonzept in Bezug auf ein adaptives Fahrmanöverauswahlverhalten realisiert werden. Insbesondere wird einem Benutzer des Systems eine einfache Möglichkeit gegeben, eine große Anzahl von verschiedenen Fahrmanövern über ein dediziertes Eingabemedium und eine Anzeigeeinrichtung, beispielsweise ein Display (Bildschirm) eines Full Digital Clusters (Volldigitalgerätegruppe), selektieren und beauftragen zu können.

Das System verfügt über eine intuitive Anzeige- und Bedienlogik sowie eine schnelle Manöverauswahl und Beauftragung, insbesondere mit kurzen Dialogzeiten. Aufgrund der unterschiedlichen Betriebsarten der Anzeigeeinrichtung in einem Darstellungsmodus zur Darstellung der Fahrstrecke in den verschiedenen Darstellungsarten und in einem Eingabemodus zur Auswahl eines der möglichen Fahrmanöver, wird einem Nutzer klar angezeigt, ob auf der Anzeigeeinrichtung lediglich Informationen zur Fahrstrecke dargestellt werden oder ein mögliches Fahrmanöver durch eine aktive Eingabe seitens des Nutzers ausgewählt und beauftragt werden kann.

Das mit dem System zur Auswahl von Fahrmanövern während des automatisierten Fahrens realisierte Konzept bezieht sich auf das Prinzip des sogenannten Fokus Switch Levels (FSL). Gemäß diesem Konzept gibt es verschiedene Fokus Switch Levels (Darstellungsarten) einer Fahrstrecke, die der Benutzer während des automatisierten Fahrens mit Hilfe der Auswahleinrichtung, das heißt eines dedizierten Eingabemediums, wählen kann. Die auf der Anzeigeeinrichtung angezeigten Darstellungsarten der Fahrstrecke können sich im Detailierungsgrad bezogen auf die Kartendarstellung (gefahrene Routendarstellung) unterscheiden. Das System bietet einem Nutzer je nach Wahl des Fokus Switch Levels, das heißt der Darstellungsart beziehungsweise der gewählten Vergrößerungsstufe einer Fahrstrecke, kontextbezogene mögliche Fahrmanöver an.

Mit Hilfe des Systems wird eine adaptive Human-Machine-Interface(Mensch-Maschine-Schnittstelle)-Ausgabestrategie für eine Fahrmanöverauswahl während des automatisierten Fahrens realisiert. Das System bietet insbesondere eine reduzierte und kontextbezogene Manöverauswahlstrategie in Verbindung mit einer intuitiv schnell erlernbaren Anzeige- und Bedienlogik. Je nach Darstellungsart, insbesondere Vergrößerungsstufe/Zoomlevel, der Fahrstrecke kann die Fahrmanöverauswahl auf unterschiedlichen visuellen Ausgabemedien, wie zum Beispiel einem augmented reality (erweiterte Realität) HUD (Head up Display)(Anzeige in Kopfhöhe), einer LED-Matrix, einer VR-Brille, etc. angezeigt werden.

Die Erfindung wird im Folgenden anhand von Figuren, die Ausführungsbeispiele der vorliegenden Erfindung zeigen, näher erläutert.

Es zeigen:
Figur 1 ein Fahrzeug, mit einem System zur Auswahl von Fahrmanövern während des automatisierten Fahrens,
Figur 2A die Anzeige einer Fahrstrecke in einer ersten Darstellungsart auf einer Anzeigeeinrichtung im Darstellungsmodus,
Figur 2B eine Anzeige von möglichen Fahrmanövern für die erste Darstellungsart der Fahrstrecke auf der Anzeigeeinrichtung im Eingabemodus,
Figur 3A die Anzeige einer Fahrstrecke in einer zweiten Darstellungsart auf einer Anzeigeeinrichtung im Darstellungsmodus,
Figur 3B eine Anzeige von möglichen Fahrmanövern für die zweite Darstellungsart der Fahrstrecke auf der Anzeigeeinrichtung im Eingabemodus,
Figur 4a die Anzeige einer Fahrstrecke in einer dritten Darstellungsart auf einer Anzeigeeinrichtung im Darstellungsmodus,
Figur 4B eine Anzeige von möglichen Fahrmanövern für die dritte Darstellungsart der Fahrstrecke auf der Anzeigeeinrichtung im Eingabemodus.

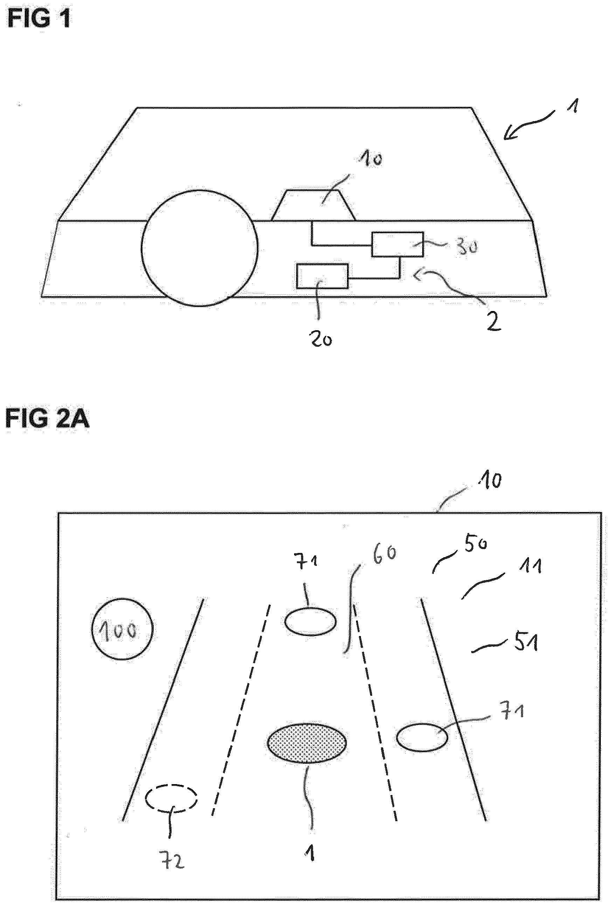

Figur 1 zeigt ein Fahrzeug 1 mit einem System 2 zur Auswahl von Fahrmanövern des Fahrzeugs 1 zum automatisierten Fahren. Das System umfasst eine Anzeigeeinrichtung 10 zur Anzeige einer Fahrstrecke des Fahrzeugs in verschiedenen Darstellungsarten. Die Anzeigeeinrichtung 10 kann beispielsweise einen Bildschirm, insbesondere ein Display eines FDC (Full Digital Cluster) sein. Des Weiteren verfügt das System 2 über eine Auswahleinrichtung 20 zur Auswahl einer der Darstellungsarten der Fahrstrecke des Fahrzeugs 1 während des automatisierten Fahrens sowie eine Steuereinrichtung 30 zur Steuerung der Anzeigeeinrichtung 10. Die Steuereinrichtung 30 ist dazu ausgebildet, in Abhängigkeit von der ausgewählten Darstellungsart der Fahrstrecke des Fahrzeugs 1 unterschiedliche mögliche Fahrmanöver zur Auswahl auf der Anzeigeeinrichtung 10 darzustellen. Die Auswahleinrichtung 20 ist dazu ausgebildet, eines der möglichen Fahrmanöver zur Ausführung während des automatisierten Fahrens auszuwählen.

Gemäß einer möglichen Ausführungsform des Systems 2 kann die Anzeigeeinrichtung 10 in einem Darstellungsmodus 11 zur Darstellung einer Fahrstrecke 50 in verschiedenen Darstellungsarten und in einem Eingabemodus 12 zur Auswahl eines der möglichen Fahrmanöver betrieben werden.

Figur 2A zeigt eine Darstellung einer Fahrstrecke 50 des Fahrzeugs 1 während des automatisierten Fahrens in einer ersten Darstellungsart auf der Anzeigeeinrichtung 10. Die Fahrstrecke 50 wird in der ersten Darstellungsart (Fokus Switch Level 1) in einer ersten Vergrößerungsstufe dargestellt, so dass ein verhältnismäßig kurzer Streckenabschnitt 51, beispielsweise ein Streckenabschnitt unter einem Kilometer Länge, angezeigt wird. In der ersten Vergrößerungsstufe wird beispielsweise nur ein kleiner Ausschnitt der Fahrstrecke mit einem hohen Detailierungsgrad auf der Anzeigeeinrichtung 10 dargestellt. Insbesondere wird die nähere Umgebung um eine aktuelle Fahrzeugposition angezeigt (Umgebungsvisualisierung).

Dargestellt wird beispielsweise das Fahrzeug 1 auf einer Fahrbahn 60. Des Weiteren werden Objekte 71 neben beziehungsweise vor dem Fahrzeug 1 sowie Objekte 72, die sich hinter dem Fahrzeug 1 befinden, angezeigt. Des Weiteren wird die maximal mögliche Geschwindigkeit von 100 km/h in Form eines Schildes angezeigt.

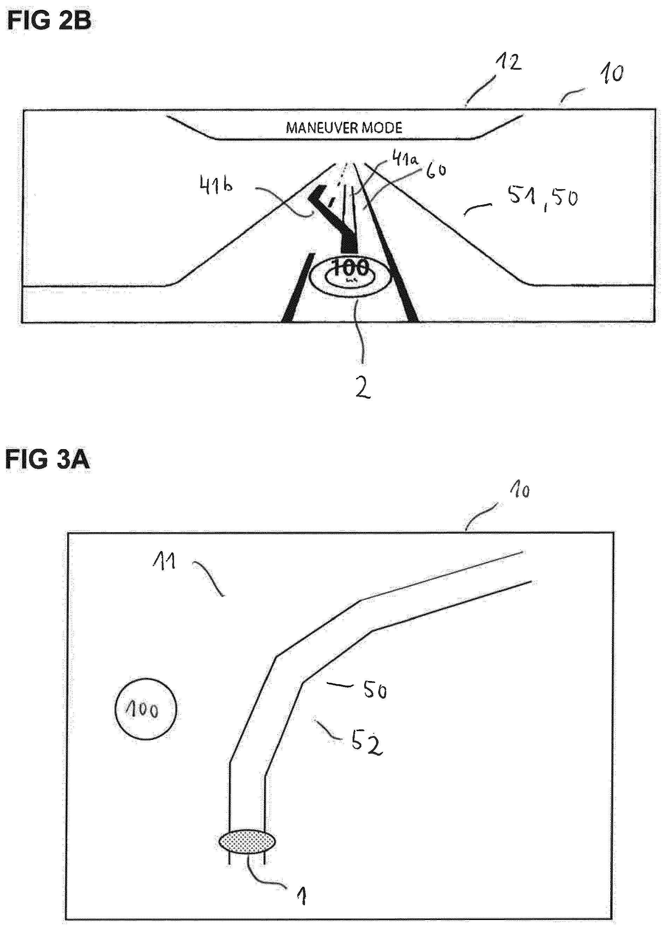

Während die Anzeigeeinrichtung 10 in Figur 2A im Darstellungsmodus 11 betrieben wird, in dem lediglich die Umgebung um eine aktuelle Fahrzeugposition herum visualisiert ist, wird die Anzeigeeinrichtung 10 in Figur 2B im Eingabemodus 12 betrieben. Im Eingabemodus 12 werden einem Nutzer unterschiedliche Fahrmanöver 41a, 41b zur Auswahl und Ausführung durch das System angeboten. Wenn das Fahrmanöver 41a ausgewählt ist, fährt das Fahrzeug auf der momentanen Fahrspur weiter geradeaus. Wenn hingegen das Fahrmanöver 41b ausgewählt wird, erfolgt ein Fahrstreifenwechsel/Spurwechsel, um beispielsweise ein vorausfahrendes Fahrzeug zu überholen.

In der ersten Darstellungsart beziehungsweise der ersten Vergrößerungsstufe der Fahrstrecke 50 auf der Anzeigeeinrichtung 10 werden im Eingabemodus/Manövermodus 12 ausschließlich solche Fahrmanöver angeboten, die in einem unmittelbarem Zeitraum, insbesondere unmittelbar, zumindest aber kurzfristig, beispielsweise unter einer Minute ab ihrer Auswahl, ausgeführt werden können. Dazu gehört beispielsweise der in Figur 2B angezeigte Fahrstreifenwechsel für einen Überholvorgang.

Figur 3A zeigt ein im Vergleich zu Figur 2A größeren Abschnitt 52 der Fahrstrecke 50 auf der Anzeigeeinrichtung 10. Die Anzeigeeinrichtung 10 wird im Darstellungsmodus 11 betrieben. Der Abschnitt 52 der Fahrstrecke 50 wird in einer zweiten Darstellungsart (Fokus Switch Level 2) auf einer Länge von mehreren Kilometern auf der Anzeigeeinrichtung 10 angezeigt. Im Beispiel der Figur 3A wird der Streckenabschnitt 52 der Fahrstrecke 50 in der Navigationskartendarstellung angezeigt.

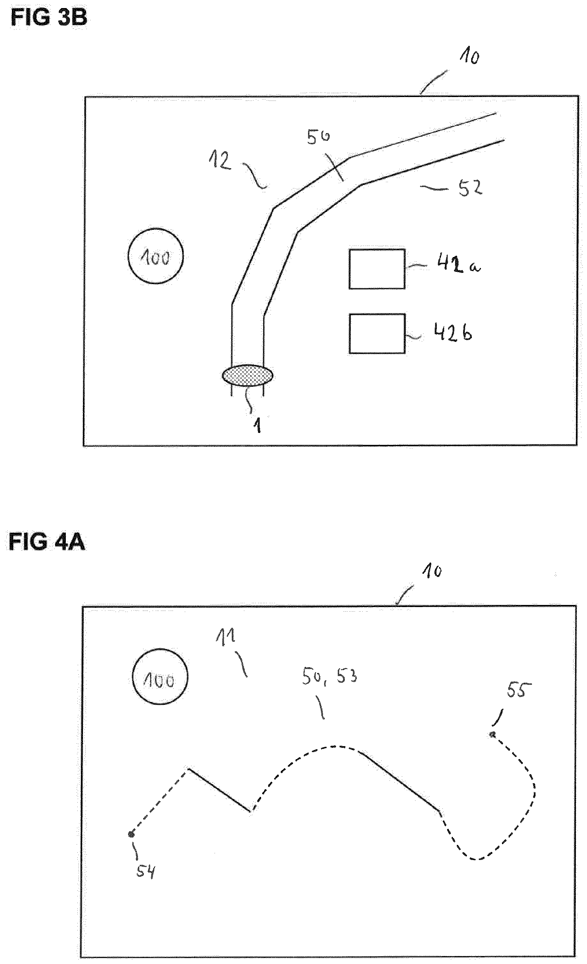

Figur 3B zeigt die zur Navigationskartendarstellung der Figur 3A entsprechende Darstellungsart der Fahrstrecke 50 im Eingabe-/Manövermodus 12 zur Auswahl eines Fahrmanövers 42a beziehungsweise 42b. Dargestellt ist wieder der Streckenabschnitt 52 der Fahrstrecke 50 auf einer Länge von mehreren Kilometern. Als ein mögliches Fahrmanöver 42a wird einem Nutzer das Anhalten an einem Rasthof in einigen Kilometern Entfernung von der aktuellen Fahrzeugposition angeboten. Ein weiteres Fahrmanöver 42b, das zur Auswahl angezeigt wird, ist das Ausfahren aus einer Ausfahrt in mehreren Kilometern Entfernung von der aktuellen Fahrzeugposition.

Im Ausführungsbeispiel der Figur 3B werden beim Betreiben der Anzeigeeinrichtung 10 im Eingabe-/Manövermodus 12 nur solche Fahrmanöver angezeigt, die in Bezug auf die aktuelle Fahrzeugposition in naher Zukunft ausgeführt werden können. Dazu gehört beispielsweise das Fahrmanöver 42a, das heißt beispielsweise das Anhalten an einem nächsten Rasthof, oder das Fahrmanöver 42b, das heißt beispielsweise das Ausfahren von einer Autobahn an der nächsten Ausfahrt. Es werden zum Beispiel solche Fahrmanöver angezeigt, die ab ihrer Auswahl in einem zeitlichen Abstand von über einer Minute ausgeführt werden oder in Bezug auf die aktuelle Fahrzeugposition erst in mehr als einem Kilometer Entfernung ausgeführt werden.

Figur 4A zeigt die Fahrstrecke 50 auf der Anzeigeeinrichtung im Darstellungsmodus in einer dritten möglichen Darstellungsart (Fokus Switch Level 3). Die dritte Darstellungsart zeigt die Fahrstrecke 50 beispielsweise in der kleinsten Vergrößerungsstufe. In der dritten Darstellungsart kann zum Beispiel die gesamte Fahrstrecke/Gesamtroute 53 auf der Anzeigeeinrichtung 10 dargestellt werden (Gesamtroutendarstellung). Im Ausführungsbeispiel der Figur 4A sind diejenigen Abschnitte der Gesamtroute, auf denen automatisiertes Fahren möglich ist, als durchgezogene Linien dargestellt, während auf den strichliniert gezeichneten Streckenabschnitten kein automatisiertes Fahren möglich ist.

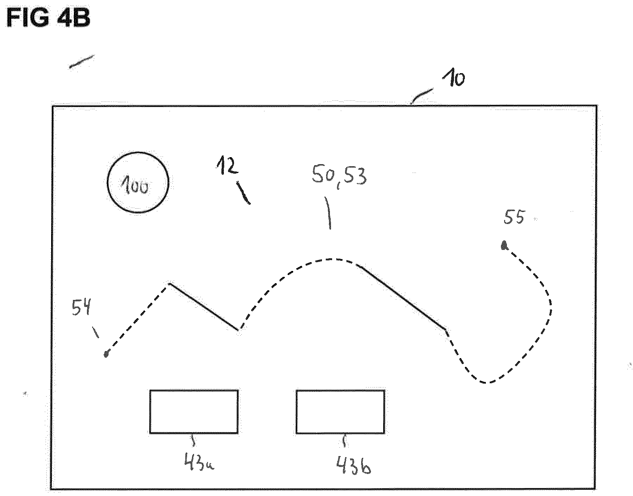

Während Figur 4A die Darstellung der Fahrstrecke 50 im Darstellungsmodus 11 zeigt, in dem von einem Nutzer des Systems keine Eingaben vorgenommen werden können, ist in Figur 4B die Anzeigeeinrichtung 10 im Eingabe-/Manövermodus 12 dargestellt. Im Eingabe-/Manövermodus 12 werden mögliche Fahrmanöver 43a und 43b als mögliche Auswahloptionen für einen Nutzer auf der Anzeigeeinrichtung 10 dargestellt. Ein Nutzer kann beispielsweise als Fahroption 43a auswählen, dass das System so oft wie möglich auf der gesamten Route automatisiert fährt. Als weiteres mögliches Fahrmanöver 43b kann ein Nutzer auswählen, dass ein Fahrzeug auf der gesamten Fahrstrecke zum Beispiel möglichst energiesparend oder mit maximal möglicher Geschwindigkeit unterwegs ist. In der dritten Darstellungsart werden einem Nutzer im Eingabemodus 12 beispielsweise solche Fahrmanöver zur Auswahl angeboten, die Einfluss auf die Gesamtroute haben.

Wie die oben angegebenen Ausführungsbeispiele zeigen, ist die Anzeigeeinrichtung 10 im Darstellungsmodus 11 zur Darstellung der Fahrstrecke 50 in den verschiedenen Darstellungsarten und im Eingabe-/Manövermodus 12 zur Auswahl eines der Fahrmanöver 41a, 41b, 42a, 42b, 43a, 43b betreibbar. Die Auswahleinrichtung 20 ist zur Auswahl eines Betreibens der Anzeigeeinrichtung 10 in dem Darstellungsmodus 11 und zur Auswahl eines Betreibens der Anzeigeeinrichtung 10 in dem Eingabe-/Manövermodus 12 ausgebildet. Die Auswahleinrichtung 20 kann beispielsweise ein Bedienfeld mit Tasten und/oder einen Druckknopf und/oder einen Drehsteller aufweisen. Des Weiteren besteht die Möglichkeit, die Auswahleinrichtung 20 in die Anzeigeeinrichtung 10 zu integrieren. Die Anzeigeeinrichtung 10 kann zum Beispiel als ein berührungsempfindlicher Bildschirm (touch screen) ausgebildet sein.

Die Steuereinrichtung 30 ist dazu ausgebildet, auf der Anzeigeeinrichtung 10 die Fahrstrecke 50 in verschiedenen Darstellungsarten, wie sie in den Figuren 2A, 3A und 4A beispielhaft gezeigt sind, darzustellen, wenn die Anzeigeeinrichtung 10 in dem Darstellungsmodus 11 betrieben wird. Des Weiteren ist die Steuereinrichtung 30 dazu ausgebildet, auf der Anzeigeeinrichtung 10 unterschiedliche mögliche Fahrmanöver 41a, 41b, 42a, 42b und 43a, 43b zur Auswahl anzuzeigen, wie in den Figuren beispielhaft 2B, 3B und 4B dargestellt ist, wenn die Anzeigeeinrichtung 10 in dem Eingabemodus 12 betrieben wird. Die zur Auswahl angebotenen Fahrmanöver werden dabei in Abhängigkeit von der Darstellungsart im zu dem jeweiligen Eingabe-/Manövermodus zugehörigen Darstellungsmodus angezeigt.

Wie in den Figuren 2A, 3A und 4A gezeigt ist, ist die Anzeigeeinrichtung 10 dazu ausgebildet, die Fahrstrecke 50 in verschiedenen Vergrößerungsstufen als möglichen Darstellungsarten abzubilden. Die Auswahleinrichtung 20 ist dazu ausgebildet, eine der Vergrößerungsstufen/Darstellungsarten der Fahrstrecke 50 auszuwählen. Die Steuereinrichtung 30 ist dazu ausgebildet, in Abhängigkeit von der ausgewählten Vergrößerungsstufe die unterschiedlichen möglichen Fahrmanöver 41a, 41b, 42a, 42b und 43a, 43b zur Auswahl auf der Anzeigeeinrichtung 10 darzustellen, wenn die Anzeigeeinrichtung 10 im Eingabemodus betrieben wird.

Die Anzeigeeinrichtung 10 ist beispielsweise dazu ausgebildet, einen ersten Streckenabschnitt 51 der Fahrstrecke 50 mit einer Umgebung um den ersten Streckenabschnitt herum auf der Anzeigeeinrichtung 10 darzustellen, wenn die Fahrstrecke 50 mit der ersten Vergrößerungsstufe auf der Anzeigeeinrichtung 10 dargestellt wird und die Anzeigeeinrichtung 10 im Darstellungsmodus betrieben wird. Ein derartiger Streckenausschnitt der Fahrstrecke 50 auf der Anzeigeeinrichtung 10 in Figur 2A in Form einer Umgebungsvisualisierung dargestellt.

Die Anzeigeeinrichtung 10 ist des Weiteren dazu ausgebildet, mindestens einen zweiten Streckenabschnitt 52 der Fahrstrecke 50 mit einer Umgebung um den zweiten Streckenabschnitt herum auf der Anzeigeeinrichtung 10 darzustellen, wenn die Fahrstrecke 50 mit der zweiten Vergrößerungsstufe auf der Anzeigeeinrichtung 10 dargestellt wird und die Anzeigeeinrichtung 10 im Darstellungsmodus betrieben wird. In Figur 3A ist beispielsweise ein Streckenabschnitt 52 der Fahrstrecke 50 auf der Anzeigeeinrichtung 10 im Darstellungsmodus 11 dargestellt, der länger ist als der Streckenabschnitt 51 der Figur 2A.

Die Anzeigeeinrichtung 10 ist dazu ausgebildet, die Umgebung um den ersten Streckenabschnitt 51 der Fahrstrecke 50 mit einem höheren Detaillierungsgrad als die Umgebung um den zweiten Teilabschnitt 52 der Fahrstrecke 50 darzustellen. Beispielsweise werden in der Darstellungsart der Figur 2A Objekte, die sich unmittelbar vor, neben oder hinter dem Fahrzeug 1 befinden, dargestellt. Auf dem in Figur 3A dargestellten längeren Streckenabschnitt 52 der Fahrstrecke 50 werden Objekte in einer Umgebung um diesen Streckenabschnitt mit einem geringeren Detaillierungsgrad angezeigt. Es werden beispielsweise Ausfahrten, Parkplätze oder Rasthöfe, nicht aber die unmittelbare Umgebung um die aktuelle Fahrzeugposition angezeigt.

Die Steuereinrichtung 30 ist dazu ausgebildet, auf der Anzeigeeinrichtung 10 erste der möglichen Fahrmanöver 41a, 41b zur Auswahl anzuzeigen, wenn die Umgebung um den ersten Streckenabschnitt 51 der Fahrstrecke 50 auf der Anzeigeeinrichtung 10 dargestellt wird und die Anzeigeeinrichtung 10 im Eingabe-/Manövermodus 12 betrieben wird, wie beispielsweise in Figur 2B gezeigt ist. Des Weiteren ist die Steuereinrichtung 30 dazu ausgebildet, auf der Anzeigeeinrichtung 10 zweite der möglichen Fahrmanöver 42a, 42b zur Auswahl anzuzeigen, wenn die Umgebung um den zweiten Streckenabschnitt 52 der Fahrstrecke 50 auf der Anzeigeeinrichtung 10 dargestellt wird und die Anzeigeeinrichtung 10 im Eingabe-/Manövermodus 12 betrieben wird. Dieser Fall ist in Figur 3B dargestellt.

Die ersten möglichen Fahrmanöver 41a, 41b sind solche Fahrmanöver, die beim automatisierten Fahren ab ihrer Auswahl in kürzerer Zeit als die zweiten möglichen Fahrmanöver 42a, 42b erfolgen. Die ersten möglichen Fahrmanöver 41a, 41b sind insbesondere solche Fahrmanöver, die an einem Ort erfolgen, der näher an einem aktuellen Standort des Fahrzeugs 1 liegt, als der Ort, an dem die zweiten möglichen Fahrmanöver 42a, 42b erfolgen.

Gemäß einer weiteren möglichen Ausführungsform kann die Auswahleinrichtung 20 derart ausgebildet sein, dass neben der ersten und zweiten der Vergrößerungsstufen der Fahrstrecke 50 mindestens noch eine dritte der Vergrößerungsstufen/Darstellungsarten der Fahrstrecke 50 mittels der Auswahleinrichtung 20 auswählbar ist. Die Anzeigeeinrichtung 10 ist insbesondere derart ausgebildet, dass eine Gesamtstrecke 53 zwischen einem Startpunkt 54 des automatisierten Fahrens und einem Zielpunkt 55 des automatisierten Fahrens auf der Anzeigeeinrichtung 10 dargestellt wird, wenn die dritte Vergrößerungsstufe ausgewählt worden ist.

Die Steuereinrichtung 30 ist dazu ausgebildet, auf der Anzeigeeinrichtung 10 dritte mögliche, von den ersten und zweiten möglichen Fahrmanövern verschiedene Fahrmanöver 43a, 43b zur Auswahl anzuzeigen, wenn die Gesamtstrecke 53 auf der Anzeigeeinrichtung 10 dargestellt wird. Die dritten möglichen Fahrmanöver 43a, 43b sind solche Fahrmanöver, die die Gesamtstrecke 53 betreffen.

## Patentansprüche

1. System zur Auswahl von Fahrmanövern eines Fahrzeugs zum automatisierten Fahren, umfassend:
- eine Anzeigeeinrichtung (10) zur Anzeige einer Fahrstrecke (50) des Fahrzeugs (1) in verschiedenen Darstellungsarten,
- eine Auswahleinrichtung (20) zur Auswahl einer der Darstellungsarten der Fahrstrecke (50),
- eine Steuereinrichtung (30) zur Steuerung der Anzeigeeinrichtung (10),
- wobei die Steuereinrichtung (30) dazu ausgebildet ist, in Abhängigkeit von der ausgewählten Darstellungsart der Fahrstrecke (50) unterschiedliche mögliche Fahrmanöver (41a, 41b, 42a, 42b, 43a, 43b) zur Auswahl auf der Anzeigeeinrichtung (10) darzustellen,
- wobei die Auswahleinrichtung (20) dazu ausgebildet ist, eines der unterschiedlichen möglichen Fahrmanöver (41a, 41b, 42a, 42b, 43a, 43b) zur Ausführung während des automatisierten Fahrens auszuwählen.

2. System nach Anspruch 1,
- wobei die Anzeigeeinrichtung (10) in einem Darstellungsmodus (11) zur Darstellung der Fahrstrecke (50) in den verschiedenen Darstellungsarten und in einem Eingabemodus (12) zur Auswahl eines der Fahrmanöver (41a, 41b, 42a, 42b, 43a, 43b) betreibbar ist,
- wobei die Auswahleinrichtung (20) zur Auswahl eines Betreibens der Anzeigeeinrichtung (10) in dem Darstellungsmodus (11) und zur Auswahl eines Betreibens der Anzeigeeinrichtung (10) in dem Eingabemodus (12) ausgebildet ist,
- wobei die Steuereinrichtung (30) dazu ausgebildet ist, auf der Anzeigeeinrichtung (10) die Fahrstrecke (50) in den verschiedenen Darstellungsarten anzuzeigen, wenn die Anzeigeeinrichtung (10) in dem Darstellungsmodus (11) betrieben wird,
- wobei die Steuereinrichtung (30) dazu ausgebildet ist, auf der Anzeigeeinrichtung (10) die unterschiedlich möglichen Fahrmanöver (41a, 41b, 42a, 42b, 43a, 43b) zur Auswahl anzuzeigen, wenn die Anzeigeeinrichtung (10) in dem Eingabemodus (12) betrieben wird.

3. System nach Anspruch 2,
- wobei die Anzeigeeinrichtung (10) dazu ausgebildet ist, die Fahrstrecke (50) in verschiedenen Vergrößerungsstufen darzustellen,
- wobei die Auswahleinrichtung (20) dazu ausgebildet ist, eine der Vergrößerungsstufen der Fahrstrecke (50) auszuwählen,
- wobei die Steuereinrichtung (30) dazu ausgebildet ist, in Abhängigkeit von der ausgewählten Vergrößerungsstufe die unterschiedlich mögliche Fahrmanöver (41a, 41b, 42a, 42b, 43a, 43b) zur Auswahl auf der Anzeigeeinrichtung darzustellen, wenn die Anzeigeeinrichtung (10) im Eingabemodus betrieben wird.

4. System nach einem der Ansprüche 1 bis 3,
- wobei die Auswahleinrichtung (20) derart ausgebildet ist, dass eine erste und eine zweite der Vergrößerungsstufen der Fahrstrecke (50) mittels der Auswahleinrichtung (20) auswählbar ist,
- wobei die Anzeigeeinrichtung (10) dazu ausgebildet ist, einen ersten Abschnitt (51) der Fahrstrecke (50) mit einer Umgebung um den ersten Abschnitt (51) der Fahrstrecke herum auf der Anzeigeeinrichtung (10) darzustellen, wenn die Fahrstrecke (50) mit der ersten Vergrößerungsstufe auf der Anzeigeeinrichtung (10) dargestellt wird und die Anzeigeeinrichtung (10) im Darstellungsmodus betrieben wird,
- wobei die Anzeigeeinrichtung (10) dazu ausgebildet ist, einen zweiten Abschnitt (52) der Fahrstrecke (50) mit einer Umgebung um den zweiten Abschnitt (52) der Fahrstrecke herum auf der Anzeigeeinrichtung (10) darzustellen, wenn die Fahrstrecke (50) mit der zweiten Vergrößerungsstufe auf der Anzeigeeinrichtung (10) dargestellt wird und die Anzeigeeinrichtung (10) im Darstellungsmodus (11) betrieben wird,
- wobei der auf der Anzeigeeinrichtung (10) dargestellte zweite Abschnitt (52) der Fahrstrecke (50) länger als der erste Abschnitt (51) der Fahrstrecke ist.

5. System nach Anspruch 4,
wobei die Anzeigeeinrichtung (10) dazu ausgebildet ist, die Umgebung um den ersten Abschnitt (51) der Fahrstrecke (50) mit einem höheren Detailierungsgrad als die Umgebung um den zweiten Abschnitt (52) der Fahrstrecke (50) darzustellen.

6. System nach Anspruch 5,
- wobei die Steuereinrichtung (30) dazu ausgebildet ist, auf der Anzeigeeinrichtung (10) erste der möglichen Fahrmanöver (41a, 41b) zur Auswahl anzuzeigen, wenn die Umgebung um den ersten Teil (51) der Fahrstrecke (50) auf der Anzeigeeinrichtung (10) dargestellt wird und die Anzeigeeinrichtung (10) im Eingabemodus betrieben wird,
- wobei die Steuereinrichtung (30) dazu ausgebildet ist, auf der Anzeigeeinrichtung (10) zweite der möglichen Fahrmanöver (42a, 42b) zur Auswahl anzuzeigen, wenn die Umgebung um den zweiten Teil (52) der Fahrstrecke (50) auf der Anzeigeeinrichtung (10) dargestellt wird und die Anzeigeeinrichtung (10) im Eingabemodus (12) betrieben wird.

7. System nach Anspruch 6,
wobei die ersten möglichen Fahrmanöver (41a, 41b) solche Manöver sind, die beim automatisierten Fahren ab ihrer Auswahl in kürzerer Zeit als die zweiten möglichen Manöver (42) erfolgen.

8. System nach einem der Ansprüche 5 oder 6,
wobei die ersten möglichen Fahrmanöver (41a, 41b) solche Manöver sind, die an einem Ort erfolgen, der näher an einem aktuellen Standort des Fahrzeugs (1) liegt, als der Ort, an dem die zweiten möglichen Fahrmanöver (42a, 42b) erfolgen.

9. System nach einem der Ansprüche 3 bis 8,
- wobei die Auswahleinrichtung (20) derart ausgebildet ist, dass neben der ersten und zweiten der Vergrößerungsstufen der Fahrstrecke (50) mindestens noch eine dritte der Vergrößerungsstufen der Fahrstrecke (50) mittels der Auswahleinrichtung (20) auswählbar ist,
- wobei die Anzeigeeinrichtung (10) derart ausgebildet ist, dass eine Gesamtstrecke (53) zwischen einem Startpunkt (55) des automatisierten Fahrens und einem Zielpunkt (56) des automatisierten Fahrens auf der Anzeigeeinrichtung (10) dargestellt wird, wenn die dritte Vergrößerungsstufe ausgewählt ist.

10. System nach Anspruch 9,
- wobei die Steuereinrichtung (30) dazu ausgebildet ist, auf der Anzeigeeinrichtung (10) dritte mögliche, von den ersten und zweiten möglichen Fahrmanövern verschiedene Fahrmanöver (43a, 43b) zur Auswahl anzuzeigen, wenn die Gesamtstrecke (53) auf der Anzeigeeinrichtung (10) dargestellt wird,
- wobei die dritten möglichen Fahrmanöver (43a, 43b) solche Manöver sind, die die Gesamtstrecke (53) betreffen.
